# EUROPEAN PATENT APPLICATION

(11) **EP 4 592 495 A2**
(43) Date of publication of application: **30.07.2025**
(21) Application number: 25150339.7
(22) Date of filing: 06.01.2025
(51) Int. Cl.: F01D 5/00, F01D 21/00

(54) **AUGMENTED REALITY ASSISTED BORESCOPE INSPECTION OF TURBOMACHINERY ENGINES AND RELATED COMPONENTS**

(30) Priority: 04.01.2024 US 202418404324
(71) Applicant: PRATT & WHITNEY CANADA CORP., Longueuil, Québec J4G 1A1 (CA)
(72) Inventor: BEAUDET, Jeff, Saint-Bruno-de-Montarville, J3V 1A6 (CA)
(74) Representative: Dehns

(57) **Abstract**

An augmented reality inspection system (38) for inspecting features (56A-B) within a component (34) includes a camera system (40) that is configured to capture images (54) of a component (34) and a controller (42) that is configured to receive images from the camera system (40). The controller (42) is further programmed to utilize the received images (54) to determine a location of the camera system (40) and the captured images (54) on the component (34), and utilize the determined location to generate graphic images (45) relating to features (56A-B) of the component (34) at the determined location. The system (38) further includes a display (44) that is configured to generate a real-time display of the component (34) based in the captured images (54). The controller (42) is further configured to superimpose the graphic images (45) relating to features (56A-B) of the component onto the real-time display of the component (34).

## Description

### BACKGROUND

Borescope inspection of turbomachinery engines and related parts/components is utilized in the maintenance and repair of these complex machines. Accurate and timely inspection is essential for ensuring safe and reliable operation of the engines and minimizing downtime due to unscheduled maintenance. Conventional inspection methods often lack the capability to dynamically engage the operator and display relevant information directly on the screen. In standard borescope inspections, the operator may be confined to a one-way observational process, hindered by the absence of real-time, interactive features that could enhance understanding and decision-making. Improvements are desirable.

### SUMMARY

An augmented reality inspection system for inspecting features within a component (e.g., of a turbine engine) according to an aspect of the present invention, among other possible things includes, a camera system that is configured to capture images of a component, a controller that is configured to receive images from the camera system, utilize the received images to determine a location of the camera system and the captured images on the component, and utilize the determined location to generate graphic images relating to features of the component at the determined location, and a display that is configured to generate a real-time display of the component based in the captured images. The controller is further configured to superimpose the graphic images relating to features of the component onto the real-time display of the component.

A method of inspecting a turbine engine according to another aspect of the present invention, among other possible things includes, capturing images of features of a component of the turbine engine with a movable camera system, determining a location of the movable camera system and a captured image of a feature of the component based on features of the component within the captured image, generating a graphic images relating to features of the component at the determined location, and generating a real-time display of the component on a display device that utilizes the captured images and the generated graphic images that are superimposed over the captured images of the component.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine and an example inspection system.
Figure 2 is schematic view of the example inspection system.
Figure 3 is a schematic view of an example inspection image generated by the example inspection system.
Figure 4 is a schematic view of another example inspection image generated by the example inspection system.
Figure 5 is a flow diagram schematically illustrating operation of the example inspection system.

### DETAILED DESCRIPTION

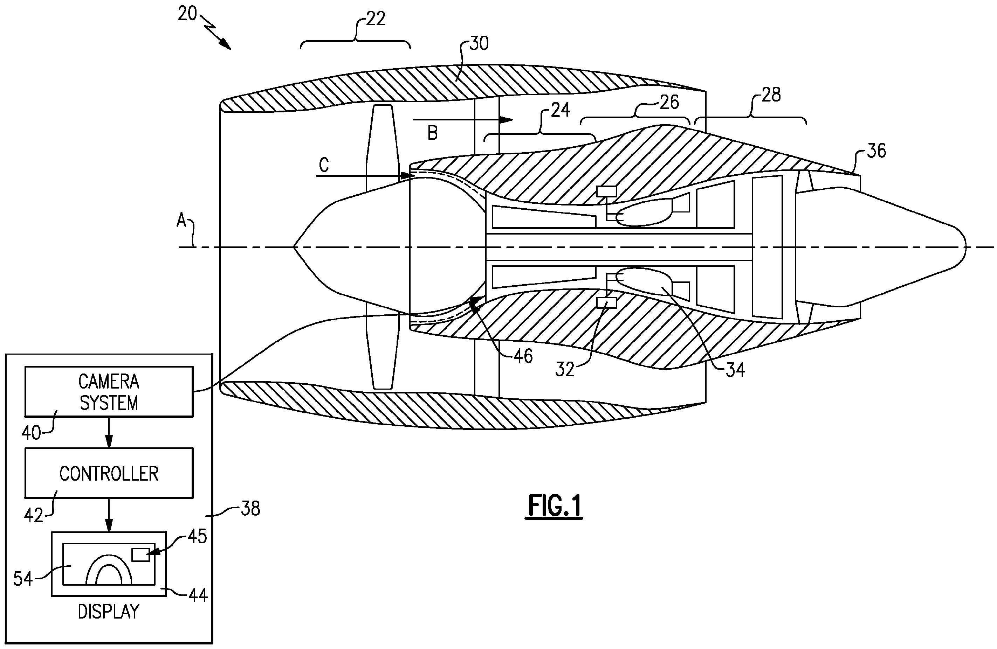

Figure 1 schematically illustrates a gas turbine engine 20 and an inspection system 38 utilized to during maintenance procedures to view areas and components of the engine 20. The example inspection system 38 provides augmented real-time images by generating graphic features that are overlaid onto images captured in real-time images to aid and direct inspection of engine components. Moreover, the example inspection system 38 uses features within the captured images to determine a location relative to the component and to prompt the generation of graphic features corresponding to the determined location.

The example gas turbine engine 20 is a turbofan that generally incorporates a fan section 22, a compressor section 24, a combustor section 26 and a turbine section 28. The fan section 22 drives air along a bypass flow path B in a bypass duct defined within a nacelle 30. The compressor section 24 drives air along a core flow path C into the combustor section 26. In the combustor section 26, the compressed air is mixed with fuel from a fuel system 32 and burnt within a combustor 34 to generate an exhaust gas flow that expands through the turbine section 28 and is exhausted through exhaust nozzle 36. Although depicted as a turbofan turbine engine in the disclosed non-limiting embodiment, it should be understood that the concepts described herein are not limited to use with turbofans as the teachings may be applied to other types of gas turbine engines and aircraft components.

Each section of the gas turbine engine 20 includes components that are subject to wear during routine operation. Accordingly, periodic inspection is conducted to assure engine operation within desired operating ranges. Some engine components are viewable along an exterior of the engine while others components are disposed deep within the engine.

For parts within the engine 20, a camera system 40 that includes a remote camera 46 may be utilized. In one disclosed example, the camera 46 is part of a probe that is routed into the engine 20 to capture images in areas that would not otherwise be accessible. Insertion of the remote camera 46 into the engine 20 enables inspection of components without costly disassembly of the engine 20. The example inspection system 38 further aids in the inspection process by adding graphics in real-time to the captured images provided on a display 44 for an operator. A controller 42 includes information corresponding to components of the engine 20 and inspection criteria pertaining to each component. The information relating to the engine component 20 is used to generate a graphic image 45 overlaid onto the real-time image 54 displayed on the display 44.

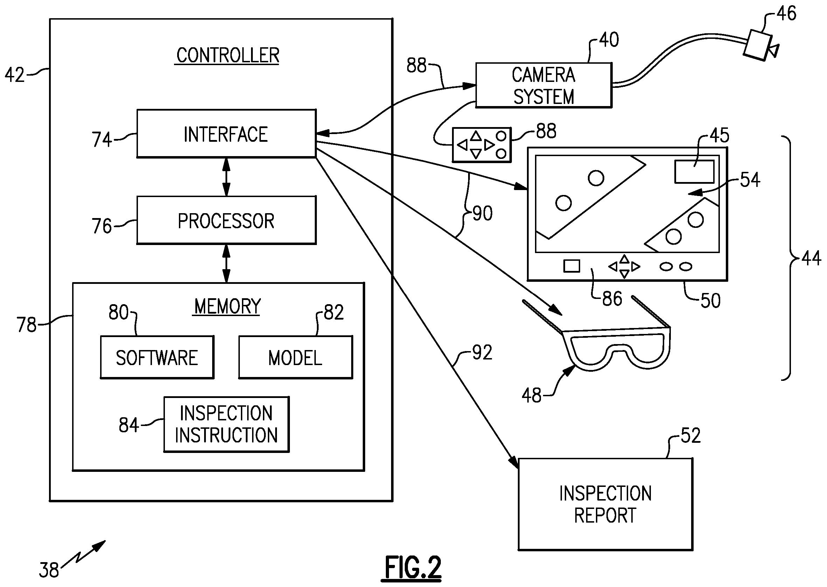

Referring to Figure 2, with continued reference to Figure 1, the inspection system 38 includes a camera system 40, a display 44 and the controller 42. The camera system 40 includes the remote camera 46. The remote camera 46 maybe a borescope, endoscope, or any other camera capable of being remotely positioned and moved to capture images of internal features and areas of the engine 20. Accordingly, the remote camera 46 may be a slender, flexible optical instrument designed for inspecting hard-to-reach areas, such as the internal components of turbine engines. The camera system 40 may include a control panel 88 that provides for operation and movement of the remote camera 46.

The display 44 may includes a panel display 50 or a headset 48 where images captured by the camera 46 are displayed in real time. The panel display 50 may be part of a computer system and/or a mobile computing device. Moreover, the panel display 50 could include a touch sensitive features to enable selection of graphic images shown on the display. The panel display 50 may also include an input device 86 that includes buttons or other actuatable features that enable an operator to control the view and/or make selections on the display relevant to current inspection activities.

The example controller 42 is a device and system for performing necessary computing or calculation operations for operation of the inspection system 38. The controller 42 may be specially constructed for operation of the inspection system 38, or it may comprise at least a general-purpose computer selectively activated or reconfigured by software programs 80 stored in a memory device 78 and executed by processor 76.

The example processor 76 may include one or more microprocessors, microcontrollers, application specific integrated circuits (ASICs), or the like. The memory device 104 may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory device 78 may incorporate electronic, magnetic, optical, and/or other types of storage media. The memory 78 stores software 80 that provides instructions which, when executed by the processor 76, cause the processor 76 to implement the various operations and/or generate instructions for operating the inspection system 38. The memory 78 will includes inspection instructions 84 that are utilized with the graphic images to aid part evaluation and inspection. The memory 78 may further includes a model 82 that includes information and geometry relating to each component of the engine 20 for use in generating images used during inspection operations.

The example controller 42 further includes a communication interface 74 that provides for the receiving inputs 88 from the camera system 40. Moreover, the communication interface 74 is further configured to communicate instructions as an output 90 utilized by the display 44 to generate the image 54 with at least one overlaid graphic 45. The communication interface 74 may further provide for the output 92 the facilitates the generation of an inspection report 52.

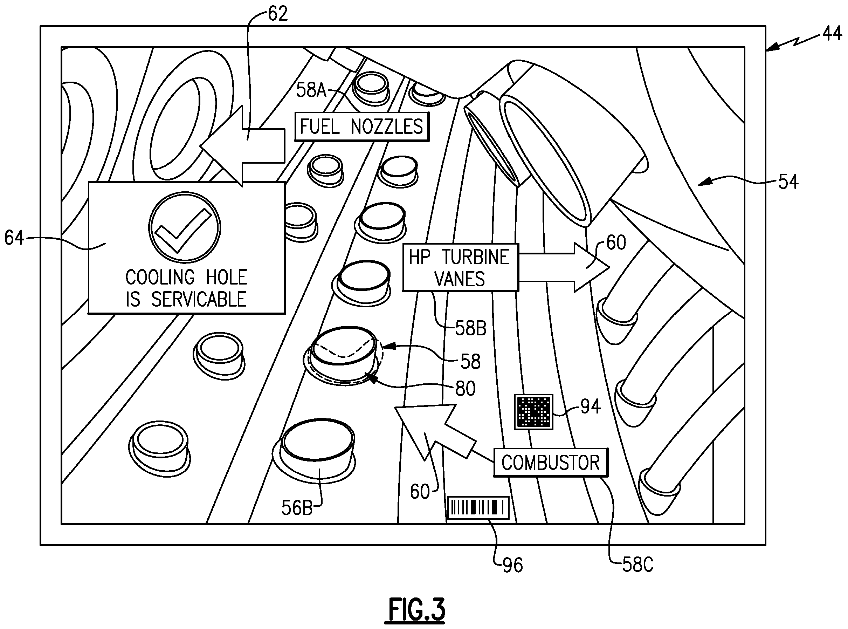

Referring to Figure 3, with continued reference to Figure 1, the display 44 provides for the generation of real-time images 54 that are augmented with graphic images. The graphic images may provide information and/or instructions to aid in the inspection process. An example image 54 is shown in Figure 3 of an internal portion of the combustor 34 within the combustor section 26. Accordingly, the example combustor 34 is shown and described as the example component 26 to illustrate features of the example inspection system 38. The example combustor 34 includes a combustion chamber with cooling holes 56A and 56B. Graphic images 58A-C are superimposed on the real-time image 54 and provide information indicative of features within the combustor 34 as shown in the image 54. The features are generated based on the location of the camera 46 within the component.

The location of the image 54 captured by the camera 46 is determined, in one example embodiment, based on the image 54 itself. The image 54 captures features of the combustor 34 and uses those features to determine a location of the camera 46 and thereby the image 54. For example, the example cooling holes 56A-B are identified and used to determine a location within the combustor 34. The determination is based on information contained in the model 82 stored in the memory 78. The model 82 will include geometric and dimensional features that are utilized to determine the location and orientation of the image relative to the component. The size, perspective, location of features within the image is used by the controller 42 based on the model 82 to correlate part geometry with a location within the combustor section 26.

The location of the camera 46 and thereby the image within the component part may also be determined based on specific markers provided on the component part. In one example embodiment, a quick response (QR) code 94 or a bar code 96 may be affixed to a portion of the component. Moreover, the QR code 94, bar code 96, or some other feature may be formed integrally to the component. The recognition of either the bar code 96 or the QR code 94 is accomplished by the controller 42 and used as a trigger to prompt generation of graphics specific to the identified location within the component. Moreover, although bar and QR codes are described by way of example, other patterns, symbols, numbers, and/or alphanumeric features could be utilized as an indication of image location to prompt the generation of graphic symbols corresponding to component features and inspection requirements. For example, a part serial number or part identification number could be integrally formed into the component and utilized by the controller to prompt generation of corresponding graphic features.

The location of the camera 46 is continuously updated based on the features contained in the image 54 to further provide for the continuous updating of graphics pertaining to relevant features. As the camera 46 moves through the component, the changing perspective and additional features are used to update the graphic features superimposed onto the real-time images.

In the example image shown in Figure 3, upon recognition of the location and the component undergoing inspection, the controller 42 causes the generation of various graphic images to aid, instruct and guide inspection. The example image 54 may be label, tag or arrow that corresponds with a feature of the component. For example, labels 58A and 58C are provided to identify features of the component being viewed by an operator. Arrows 60 associated with the labels 58B and 58C further communicate and direct the operator to specific component features during operation.

The labels may also include arrows that direct further inspection. For example, arrows 62 may communicate the next location feature for an operator to view and inspect. Accordingly, the arrows 62 provide a visual prompt that can be used to direct movement of the camera from a current another location or adjustment to camera orientation to view another feature.

The graphic images may also include a visual representation of an acceptable geometry of a feature of the component. In one example, a visual representation such as the dashed line 58 of the cooling hole 56A may be shown. The dashed lines 58 provide a visual cue indicative of a deviation from the original geometry of a feature. Moreover, the dashed lines 58 may be indicative of a tolerance range of acceptable deviations from that geometry. Although the dashed line 58 is shown with regard to one of several cooling holes 56A-B, other portions, features or the entire component within the image 54 may have applied graphic representations. The graphic representations of geometric features enable the quick determination of whether the indicated geometric deviations are acceptable or not.

The graphic features may also provide a determination of whether the geometric deviation is acceptable. In this disclosed example, an acceptance graphic 64 is provided that indicates that the features within the image 54 are within accepted criteria. The controller 42 may be programmed with acceptance criteria that is facilitated by image recognition algorithms that provide for the analysis and recognition of target images from component features. accept

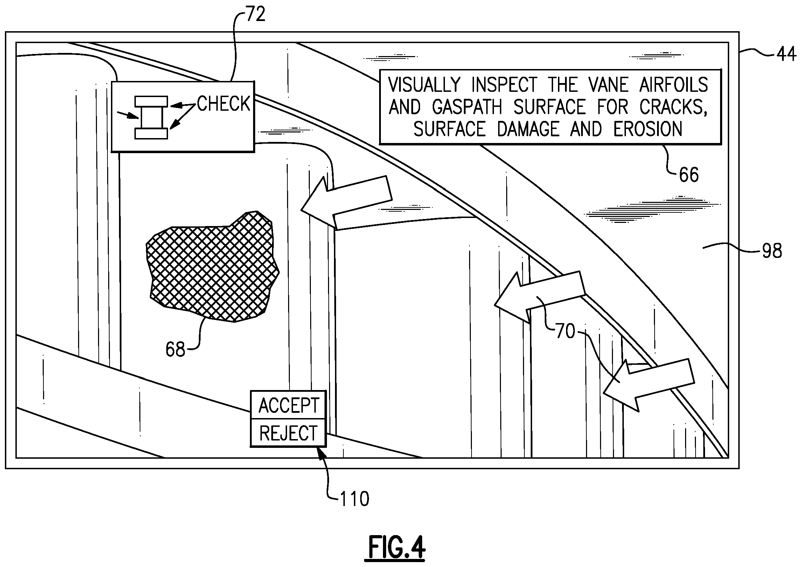

Referring to Figure 4, another image 98 is schematically shown and includes arrows 70 overlaid into the real-time image 98. A graphic including instructions for inspection of feature shown in the real-time image 98 is generated based on the location and viewable features. In this example, portions of a vane are shown with arrows 70 pointing toward areas for inspection. Additionally, a video clip 72 is superimposed over the image 98 that provides a short video corresponding to inspection of the part as shown when actuated. The video clip 72 may automatically play and/or may be prompted by an operator. Additionally, a graphic 68 is shown that identifies an area of interest based on the images to prompt the attention of an operator during inspection.

The graphic feature may include visual buttons that are actuatable by an operator to record inspection related information. In one example, virtual buttons 110 may be actuated to record determinations made during inspection. Other buttons may be included that prompt display of additional information, provides inspection related information, and/or provide any other information that may aid in the direction and progression of inspection.

Accordingly, many different graphic prompts, tags, labels, text, video, and overlays may be provided to accommodate feature specific inspection requirements. Although example graphic images relating to features of a component are shown by way of example, other graphics could be utilized and are within the contemplation and scope of this disclosure.

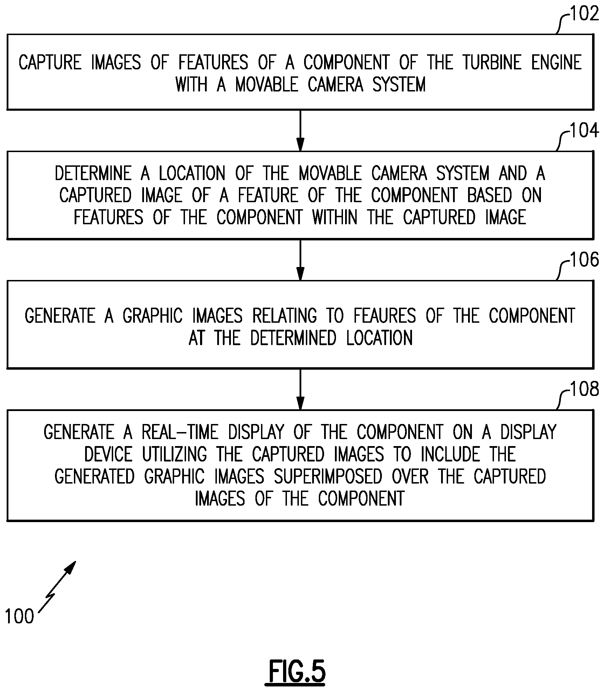

Referring to Figure 5, with continued reference to Figures 2-4, a disclosed operational embodiment is shown and described by way of a flow diagram 100 illustrating process steps for the inspection of a turbine engine utilizing the example inspection system 38. The process includes the step of capturing images of features of a component of the turbine engine with the movable camera system 40 as indicated at 102. The example camera system 40 may include a borescope, endoscope or any other movable camera device that may be used to obtain images within a component of a gas turbine engine. In one example embodiment, capturing images comprises inserting a portion of the movable camera system 40 into an internal portion of the component as is shown in Figures 3 and 4.

The camera system 40 captures real-time images for real-time viewing by an inspection operator. The camera system 40 may also be configured to and have the capability of capturing and recording still images for use in an inspection report or as a record of component condition.

The images captured by the camera system 40 may not be easily recognizable to an operator and therefore the example inspection system 38 provides for the determination of allocation of the movable camera system 40 and of the images of features of the component. The location of the images and camera system 40 is determined based only on a features within the captured image. The features may include a target image such as a QR code, bar code, a part number, geometric features or any feature that can be used to indicate a location and component. Because the example inspection system 38 utilizes target features viewable from within the image, additional sensor and location systems are not needed.

As the camera 46 captures images, computer vision algorithms embodied in the software 80 identify target features to provides a determination of the location of the camera relative to the component part as is indicated 104. The compute vision algorithm may be of any know configuration with the capability of identifying target features within the image.

The controller 42 uses the identified location as ascertained from the captured images to trigger the generation of graphic images relating to features of the component as indicated at 106. The graphic images that are generated may include inspection information, inspection instructions, part geometry information as well as prompts that are utilized for generation of an inspection report. Although several types of graphic images are shown and described by way of example, any graphic image that provides information regarding the component, the inspection process or any other relevant information could be utilized and is within the scope and contemplation of this disclosure.

The graphic images are overlaid onto the real time image as indicated at 108 to generate the augmented real-time display of the component on the display 44. The graphic images are continually updated based on the location of the camera 46 and the progress of the inspection. The graphic images may prompt movement of the camera 46 and/or prompt a sequence of the inspection.

The graphic images may include the generation of a virtual button associated with features of the component, superimposing the virtual button on the real-time display, and triggering a predefined action in response to triggering of the virtual button.

The inspection system 38 may automatically generate documentation of inspection findings based on the captured images upon completion of generated inspection directions. In instances where the example graphics includes inspection steps and instructions, the controller 42 may automatically prompt the generation of an inspection report upon completion. Completion of an inspection procedure could be indicated automatically based on a location of the camera 46 and/or be prompted based on an indication provided by an inspection operator. In any example, the inspection report 52 may be in the form a preformatted report or may be a form generated by the inspection operator.

An augmented reality inspection system 38 for inspecting features within a component according to an exemplary embodiment of this disclosure, among other possible things includes, a camera system 40 that is configured to capture images of a component, a controller 42 that is configured to receive images from the camera system 40, utilize the received images to determine a location of the camera system 40 and the captured images on the component, and utilize the determined location to generate graphic images 45 relating to features of the component at the determined location, and a display 44 that is configured to generate a real-time display of the component based in the captured images. The controller 42 is further configured to superimpose the graphic images 45 relating to features of the component onto the real-time display of the component.

In a further example embodiment of the foregoing inspection system 38, the controller 42 is further configured to identify a target image of the component and to use the identified target image to determine the location of the captured images and to generate the graphic images 45 that correspond to the determined location.

In a further example embodiment of any of the foregoing inspection systems 38, the target image includes at least one of a bar code 96, QR code 94, or a defined pattern on the component and the controller 42 is further programmed to associate the target image with the location of the captured image.

In a further example embodiment of any of the foregoing inspection systems 38, the controller 42 is configured to continuously update the determination of the location of the camera system 40 and captured images based on identification of one or more target images.

In a further example embodiment of any of the foregoing inspection systems 38, wherein the controller 42 is configured to generate a virtual button 110 associated with features of the component and to superimpose the virtual button 110 on the real-time display and the system further includes a means of actuating the virtual button 110.

In a further example embodiment of any of the foregoing inspection systems 38, the graphic image 45 includes at least one of a label, tag, arrow, or overlay 58 that corresponds to a feature of the component.

In a further example embodiment of any of the foregoing inspection systems 38, the graphic image 45 includes inspection directions that prompt the inspection of features of the component.

In a further example embodiment of any of the foregoing inspection systems 38, the inspection directions include a visual prompt that directs movement of the camera system 40 from the location determined based on captured images to another location or orientation for another feature of the component.

In a further example embodiment of any of the foregoing inspection systems 38, the graphic image 45 includes a visual representation of a geometry of a feature of the component that is superimposed on the real-time display over a corresponding feature of the component.

In a further example embodiment of any of the foregoing inspection systems 38, the controller 42 is further configured to generate one of a still image, an audio message, a video for viewing on the display 44 in response to identification of the target image.

In a further example embodiment of any of the foregoing inspection systems 38, the camera system 40 includes a borescope that is configured to capture images of internal features of the component.

In a further example embodiment of any of the foregoing inspection systems 38, the display 44 includes at least one of a portable display or a headset 48 that is configured to generate images in real-time from the camera system 40 and to superimpose the graphic images 45 generated by the controller 42.

In a further example embodiment of any of the foregoing inspection systems 38, the controller 42 is further programmed to generate documentation of inspection findings based on the captured images.

A method of inspecting a turbine engine according to another exemplary embodiment of this disclosure, among other possible things includes, capturing images of features of a component of the turbine engine with a movable camera system 40, determining a location of the movable camera system 40 and a captured image of a feature of the component based on features of the component within the captured image, generating a graphic images 45 relating to features of the component at the determined location, and generating a real-time display of the component on a display device that utilizes the captured images and the generated graphic images 45 that are superimposed over the captured images of the component.

In a further example embodiment of the foregoing method, capturing of images of features of the component parts further includes inserting a portion of the movable camera system 40 into an internal portion of the component.

In a further embodiment of any of the foregoing, the method further includes determining a location of the movable camera system 40 within the component part based on identification of a target image within the captured images of the component and using the identified target image to determine the location of the captured images and to trigger generation of graphic images 45 that correspond to the determined location.

In a further example embodiment of any of the foregoing methods, the target image includes at least one of a bar code 96, QR code 94, or a defined pattern affixed to the component.

In a further example embodiment of any of the foregoing, the method further includes generating a virtual button 110 that is associated with features of the component, superimposing the virtual button 110 on the real-time display, and triggering a predefined action in response to triggering of the virtual button 110.

In a further example embodiment of any of the foregoing, the method further includes identifying a feature of the component based on captured images and generating inspection directions that correspond to the identified feature of the component.

In a further example embodiment of any of the foregoing, the method further includes automatically generating documentation of inspection findings based on the captured images upon completion of the generated inspection directions.

Accordingly, the example disclosed inspection system 38 provides augmented real-time images by generating graphic features that are overlaid onto images captured in real-time images to aid and direct inspection of engine components. Moreover, the example inspection system uses the captured images to determine a location relative to the component and to prompt the generation of graphic features corresponding to the determined location.

Although an example embodiment has been disclosed, a worker of ordinary skill in this art would recognize that certain modifications would come within the scope of this disclosure. For that reason, the following claims should be studied to determine the scope and content of this disclosure.

## Claims

1. An augmented reality inspection system (38) for inspecting features within components, comprising:
a camera system (40) configured to capture images (54) of a component (34);
a controller (42) configured to receive the captured images (54) from the camera system (40), utilize the received captured images (54) to determine a location of the camera system (40) and the captured images relative to the component (34), and utilize the determined location to generate graphic images (45) associated with a feature (56A-B) of the component (34) at the determined location; and
a display (44) configured to generate a real-time display of the component (34) and the feature (56A-B) based in the captured images (54), wherein the controller (42) is further configured to superimpose the graphic images (45) associated with the feature (56A-B) of the component (34) onto the real-time display of the component (34).

2. The inspection system as recited in claim 1, wherein the captured images (54) are of the feature (56A-B) of the component (34) at the determined location.

3. The inspection system as recited in claim 1 or 2, wherein the controller (42) is further configured to identify a target image of the component (34) and to use the identified target image to determine the location of the captured images (54) and to generate the graphic images (45) associated with the determined location, optionally wherein the controller (42) is further configured to generate one of a still image, an audio message, a video for viewing on the display (44) in response to identification of the target image.

4. The inspection system as recited in claim 3, wherein the target image comprises at least one of a bar code (96), QR code (94), or a defined pattern on the component (34) and the controller (42) is further programmed to associate the target image with the location of the captured image (54).

5. The inspection system as recited in claim 3 or 4, wherein the controller (42) is configured to continuously update the determination of the location of the camera system (40) and captured images (54) based on identification of one or more target images, and/or wherein the controller (42) is further programmed to generate documentation of inspection findings based on the captured images (54).

6. The inspection system as recited in any preceding claim, wherein the controller (42) is configured to generate a virtual button (110) associated with features (56A-B) of the component (34) and to superimpose the virtual button (110) on the real-time display and the system (38) further includes a means of actuating the virtual button (110).

7. The inspection system as recited in any preceding claim, wherein the graphic image (45) comprises at least one of a label (58A-C), tag, arrow (60, 62), or overlay that corresponds to a feature (56A-B) of the component (34), and/or wherein the graphic image comprises a visual representation (58) of a geometry of a feature (56A-B) of the component (34) superimposed on the real-time display over a corresponding feature (56A-B) of the component (34).

8. The inspection system as recited in any preceding claim, wherein the graphic image (45) comprises inspection directions prompting the inspection of features (56A-B) of the component (34), optionally wherein the inspection directions include a visual prompt directing movement of the camera system (40) from the location determined based on captured images to another location or orientation for another feature (56A-B) of the component (34).

9. The inspection system as recited in any preceding claim, wherein the camera system (40) comprises a borescope (46) configured to capture images of internal features of the component (34).

10. The inspection system as recited in any preceding claim, wherein the display (44) comprises at least one of a portable display (50) or a headset (46) configured to generate images in real-time from the camera system (40) and to superimpose the graphic images (45) generated by the controller (42).

11. A method of inspecting a turbine engine (20) comprising:
capturing images (54) of features of a component (34) of the turbine engine (20) with a movable camera system (40);
determining a location of the movable camera system (40) and a captured image (54) of a feature (56A-B) of the component (34) based on features (56A-B) of the component (34) within the captured image (54);
generating a graphic image (45) associated with a feature (56A-B) of the component (34) at the determined location; and
generating a real-time display of the component (34) on a display device (44) utilizing the captured images (54) and the generated graphic image superimposed over the captured images (54) of the component (34).

12. The method as recited in claim 11, further comprising determining a location of the movable camera system (40) within the component (34) based on identification of a target image within the captured images (54) of the component and using the identified target image to determine the location of the captured images (54) and to trigger generation of graphic images corresponding to the determined location.

13. The method as recited in claim 12, wherein the target image comprises at least one of a bar code (96), QR code (94), or a defined pattern affixed to the component (34).

14. The method as recited in claim 11, 12 or 13, further comprising generating a virtual button (110) associated with features (56A-B) of the component (34), superimposing the virtual button (110) on the real-time display, and triggering a predefined action in response to triggering of the virtual button (110).

15. The method as recited in any of claims 11 to 14, further comprising identifying a feature (56A-B) of the component (34) based on captured images (54) and generating inspection directions corresponding to the identified feature (56A-B) of the component (54), optionally further comprising automatically generating documentation of inspection findings based on the captured images (54) upon completion of the generated inspection directions.
